# EUROPEAN PATENT APPLICATION

(11) **EP 2 913 170 A1**
(43) Date of publication of application: **02.09.2015**
(21) Application number: 13848671.7
(22) Date of filing: 15.10.2013
(51) Int. Cl.: B29B 11/16, C08J 5/06

(54) **STAMPABLE SHEET**

(30) Priority: 25.10.2012 JP 2012235635
(71) Applicant: Toray Industries, Inc., Tokyo 103-8666 (JP)
(72) Inventor: MIYOSHI, Katsuhiro, Nagoya-shi Aichi 455-8502 (JP); SHIMADA, Takashi, Otsu-shi Shiga 520-2141 (JP); HASHIMOTO, Takafumi, Nagoya-shi Aichi 455-8502 (JP); OHARA, Tetsuya, Otsu-shi Shiga 520-2141 (JP); NARUSE, Yoshihiro, Nagoya-shi Aichi 455-8502 (JP)
(74) Representative: Hoefer & Partner Patentanwälte mbB
(86) International application number: PCT/JP2013/077973
(87) International publication number: WO 2014/065161

(57) **Abstract**

A stampable sheet comprising discontinuous carbon fibers and a thermoplastic resin as a matrix resin, the stampable sheet characterized in that the viscosity η of the stampable sheet in a state where the matrix resin in the stampable sheet is molten is in a range of η₀ ≤ η < η₀exp(0.20Vf) (Pa·s), and the ratio Z of refined carbon fiber bundles (A), in which Mn/(Ln × D) is less than 8.5×10⁻¹ (mg/mm²), to the total weight of carbon fibers in the stampable sheet is in a range of 10 ≤ Z < 70 (wt%). Here, η is the viscosity at a temperature 50°C higher than the solidification start temperature of the matrix resin, Vf is the carbon fiber content (%) per unit volume of the stampable sheet, η₀ is the viscosity of the matrix resin, Mn is the weight of carbon fiber bundles, Ln is the fiber length of the carbon fibers, and D is the fiber diameter of the carbon fibers. This configuration makes it possible to provide a stampable sheet provided with the optimum range of conditions, and to achieve both high flowability during molding and high mechanical properties after molding.

## Description

### Technical Field of the Invention

The present invention relates to a stampable sheet comprising a carbon fiber composite material of carbon fibers and a thermoplastic resin, and specifically, to a stampable sheet which can achieve compatibility between high flowability and mechanical properties when a molded article is made using the same.

### Background Art of the Invention

A carbon fiber composite material comprising carbon fibers and a thermoplastic resin is used for manufacture of various molded articles, because high mechanical properties can be obtained. Specifically, when a stampable sheet comprising a carbon fiber composite material of carbon fibers and a thermoplastic resin is used for molding, because a rapid molding is possible by heat press molding, such a use is considered to be suitable for molding of mass-production articles.

With respect to conventional stampable sheets, in a stampable sheet wherein a paper or nonwoven fabric comprising carbon fibers is impregnated with a resin (for example, Patent document 1), although the mechanical properties of the stampable sheet are excellent, the flowability at the time of molding is low and the moldability is poor. This is because the carbon fibers, which are reinforcing fibers, are dispersed and therefore a stress is hard to be concentrated, and while the reinforcing effect due to the carbon fibers is sufficiently exhibited, the carbon fibers are crossed to each other to restrict their movements and therefore the carbon fibers become hard to be moved. In general, when carbon fibers are placed in a resin, the viscosity increases sharply and it becomes difficult to flow. Further, when the fiber length of carbon fibers in a resin is too long, the viscosity also tends to increase.

On the other hand, in an SMC (Sheet Molding Compound) in which a resin is impregnated into cut carbon fiber bundles, although the flowability is high and the moldability is excellent, the mechanical properties are poor. This is because a stress is liable to be concentrated to end portions of the carbon fibers because the carbon fibers are formed in a bundle, and therefore it is difficult to exhibit high mechanical properties, but the carbon fibers can move easily because they do not form networks, and therefore a good flowability can be obtained at the time of molding (for example, Patent document 2).

Further, separately from the above-described Patent documents 1 and 2, various technologies have been proposed with the aim of achieving high mechanical properties of a manufactured molded article and a good flowability at the time of molding. For example, in Patent document 3, a composite material is proposed wherein the proportion of specified carbon fiber bundles relative to the total amount of fibers in a carbon fiber composite material is suppressed to be low, and the average number of fibers in the respective specified carbon fiber bundles is controlled in a specified range. However, in such a carbon fiber composite material as described in Patent document 3 wherein the carbon fiber bundles in the carbon fiber composite material are thin, the proportion of the bundles is small and the carbon fibers are refined, although the mechanical properties of a molded article manufactured using the same are excellent, the flowability at the time of molding is low and the moldability is poor. This is because the carbon fibers, which are reinforcing fibers, are sufficiently dispersed and therefore a stress is hard to be concentrated, and while the reinforcing effect due to the carbon fibers is sufficiently exhibited, the carbon fibers are crossed to each other to restrict their movements and therefore the carbon fibers become hard to be moved.

On the other hand, in Patent document 4, a composite material is proposed wherein the proportion of specified carbon fiber bundles in a carbon fiber composite material relative to the total amount of fibers, similar to that described above, is set higher, and the average number of fibers in the respective specified carbon fiber bundles is controlled in another specified range. However, in such a carbon fiber composite material as described in Patent document 4 wherein the carbon fiber bundles are thick and the proportion of the bundles is great, although the flowability at the time of manufacturing a molded article using the same is high and the moldability is excellent, the followability in molding of carbon fibers to a small-shape part is poor, the mechanical properties are low and the variation in the mechanical properties is great. Namely, whereas the carbon fibers can move easily since they do not form networks, because the carbon fiber bundles are thick, the followability of carbon fibers is poor when a component having small member parts is molded, a stress is liable to be concentrated to end portions of the carbon fibers, and therefore it is difficult to obtain high mechanical properties.

### Prior art documents

### Patent documents

Patent document 1: JP 2002-212311 A
Patent document 2: JP 2010-163536 A
Patent document 3: JP 2011-178890 A
Patent document 4: JP 2011-178891 A

### Summary of the Invention

### Problems to be solved by the Invention

Accordingly, an object of the present invention is to provide a stampable sheet having an optimum range of conditions which can satisfy both a high flowability at the time of molding and high mechanical properties after molding, that have not been achieved by the conventional stampable sheet comprising a carbon fiber paper or nonwoven sheet or by the conventional SMC.

### Means for solving the Problems

To achieve the above-described object, a stampable sheet according to the present invention comprises discontinuous carbon fibers and a thermoplastic resin as a matrix resin, and is characterized in that a viscosity η of the stampable sheet in a state where the matrix resin in the stampable sheet is molten is in a range of η₀ ≤ η < η₀exp(0.20Vf) (Pa·s), and a proportion Z of refined carbon fiber bundles (A), in which Mn/(Ln × D) is less than 8.5×10⁻¹ (mg/mm²), to the total weight of carbon fibers in the stampable sheet is in a range of 10 ≤ Z < 90 (wt%).
Where, η: apparent viscosity of the stampable sheet at a time when the matrix resin is molten (a viscosity at a temperature of a solidification start temperature of the matrix resin + 50°C), Vf: carbon fiber content (%) per unit volume of the stampable sheet, η₀: hypothetical resin viscosity of the matrix resin obtained by extending a characteristic line up to a position of Vf = 0% in a characteristic chart which is obtained by changing the Vf and represents a relationship between the Vf and the viscosity of the stampable sheet, Mn: weight of carbon fiber bundles, Ln: fiber length of carbon fibers, D: fiber diameter of carbon fibers.

In such a stampable sheet according to the present invention, the configuration of the stampable sheet is optimized particularly so as to satisfy both a good flowability and high mechanical properties at a good balance by comprehensive consideration of the following factors: a factor that the melt viscosity of a composite material (namely, the viscosity η of a stampable sheet in a state where its matrix resin is molten) increases sharply when carbon fibers are placed in its matrix resin of a thermoplastic resin; a factor that, although the flowability at the time of molding decreases when the viscosity increases, the reduction of the flowability can be suppressed by increasing the rate of the amount of carbon fiber bundles in which carbon fibers are in a bundle form, and thus it is possible to realize a good flowability; a factor that, if the rate of carbon fiber bundles becomes too high, although a good flowability can be obtained, it becomes difficult to obtain high mechanical properties of a molded article; and a factor that the optimum range of form of carbon fiber bundles in view of good flowability does not always equal to the optimum range of form of carbon fiber bundles in view of high mechanical properties.

More concretely, when the viscosity η of the stampable sheet is in a range of η₀ ≤ η < η₀exp(0.20Vf) (Pa·s), although it is higher than the viscosity of the resin alone as a natural result, the viscosity η is suppressed to become too high and thus a good flowability at the time of molding can be secured. The viscosity η is preferably in a range of η₀ ≤ η < η₀exp(0.13Vf) (Pa·s), and more preferably in a range of η₀ ≤ η < η₀exp(0.10Vf) (Pa·s). Further, refined carbon fiber bundles (A) in which Mn/(Ln x D) is less than 8.5×10⁻¹ (mg/mm²) are carbon fiber bundles which have a relatively high degree of refinement and are likely to exhibit high mechanical properties. When a proportion Z of such refined carbon fiber bundles (A) to the total weight of carbon fibers is in a range of 10 ≤ Z < 90 (wt%), it becomes possible to exhibit high mechanical properties at a good balance while securing a good flowability as described above.

Further, in the above-described stampable sheet according to the present invention, it is further possible to employ a configuration wherein the proportion Z of refined carbon fiber bundles (A), in which Mn/(Ln × D) is less than 8.5×10⁻¹ (mg/mm²), to the total weight of carbon fibers is in a range of 10 ≤ Z < 70 (wt%), that a proportion Y of refined carbon fiber bundles (B), in which Mn/(Ln × D) is 8.5×10⁻¹ (mg/mm²) or more, to the total weight of carbon fibers is in a range of 30 ≤ Z < 90 (wt%), an average value X of Mn/Ln of the carbon fiber bundles (B) is in a range of 1.1×10⁻² ≤ X ≤ 8.1×10⁻² (mg/mm), and the Y satisfies Y ≥ 100X + 30.

In such an embodiment, in particular the flowability of the stampable sheet can be further improved by optimizing the proportion Y of carbon fiber bundles (B) in which Mn/(Ln × D) is 8.5×10⁻¹ (mg/mm²) or more, namely, carbon fiber bundles (B) which have a relatively low degree of refinement and are likely to exhibit high flowability, to the total weight of carbon fibers; the average value X of Mn/Ln of the carbon fiber bundles (B); and the range of the relationship between Y and X. In order to realize the compatibility between high flowability and mechanical properties more securely, a more preferred range of the average value X of Mn/Ln of the carbon fiber bundles (B) is 1.5×10⁻² ≤ X ≤ 5.5×10⁻² (mg/mm).

Further, in order to realize the compatibility between high flowability and mechanical properties, it is preferred that a standard deviation σ of a number of fibers xₙ = Mn/(Ln x F) forming a bundle of the above-described carbon fiber bundles (B) is in a range of 50 ≤ σ ≤ 400. Where, F is a fineness of carbon fibers, and the calculation methods of the number of fibers xₙ and the standard deviation σ will be described later. If the above-described standard deviation σ is lower than 50, the flowability is deteriorated, and if the above-described standard deviation σ is more than 400, the mechanical properties are deteriorated, and the dispersion of the mechanical properties becomes great.

The above-described standard deviation σ is more preferably in a range of 100 ≤ σ ≤ 380, and further preferably 150 ≤ σ ≤ 360.

Further, as aforementioned, since the viscosity is likely to become high and the flowability is likely to be lowered if the fiber length of carbon fibers becomes too long, in the stampable sheet according to the present invention, it is preferred that the fiber length of carbon fibers Ln in a stampable sheet is in a range of 5 to 25 mm.

In the stampable sheet according to the present invention, although the kind of the matrix resin comprising thermoplastic resin is not particularly restricted, it is preferred to be any of polyamide, polypropylene and polyphenylene sulfide from the viewpoint of moldability.

Further, in the stampable sheet according to the present invention, in order to realize a good flowability more securely while realizing high mechanical properties, it is preferred that a single fiber flexural stiffness of carbon fibers forming the above-described carbon fiber bundles (A) is in a range of 1.0 x 10⁻¹¹ to 2.8 x 10⁻¹¹ (Pa·m⁴).

In order to realize a further high flowability, the above-described η₀ is preferably in a range of 2.0×10² ≤ η₀ ≤ 5.0×10⁴ (Pa·s). If η₀ becomes lower than 2.0×10², there is a fear that the resin may become brittle and the properties may be lowered, and if η₀ becomes greater than 5.0×10⁴, there is a fear that the viscosity may become high even when the gradient of the characteristic line is small and therefore the flowability may deteriorate.

In order to realize the compatibility between high flowability and mechanical properties more securely, the viscosity η of a stampable sheet is preferably in a range of η₀exp(0.07Vf) ≤ η < η₀exp(0.20Vf) (Pa·s), and the Vf is preferably in a range of 5 ≤ Vf ≤ 70 (%).

Further, in the case where the viscosity η of a stampable sheet is in the range of η₀exp(0.07Vf) ≤ η < η₀exp(0.20Vf) (Pa·s), it is preferred that carbon fiber aggregates in the stampable sheet comprise a carbon fiber nonwoven fabric made by carding method.

Alternatively, in order to realize a higher flowability, the viscosity η of the above-described stampable sheet is preferably in a range of η₀ ≤ η < η₀exp(0.07Vf) (Pa·s), and the Vf is preferably in a range of 5 ≤ Vf ≤ 70 (%).

Furthermore, in the case where the viscosity η of the above-described stampable sheet is in a range of η₀ ≤ η < η₀exp(0.07Vf) (Pa·s), it is preferred that carbon fiber aggregates in the stampable sheet comprise a carbon fiber nonwoven fabric made by air laid method.

### Effect according to the Invention

Thus, in the stampable sheet according to the present invention, it becomes possible to provide an excellent stampable sheet wherein both an excellent flowability at the time of molding and high mechanical properties of a molded article can be achieved, and wherein the mechanical properties are in a narrow range of variation.

### Brief explanation of the Drawings

[Fig. 1] Fig. 1 is a characteristic chart showing concepts of viscosity and solidification start temperature of a resin in the present invention.
[Fig. 2] Fig. 2 is a characteristic chart showing a concept of determination of viscosity in the present invention.
[Fig. 3] Fig. 3 is a schematic diagram showing an example of a carding machine.
[Fig. 4] Fig. 4 is a schematic diagram showing an example of an air laid machine.

### Embodiments for carrying out the Invention

Hereinafter, the present invention will be explained in detail together with Examples and Comparative Examples.

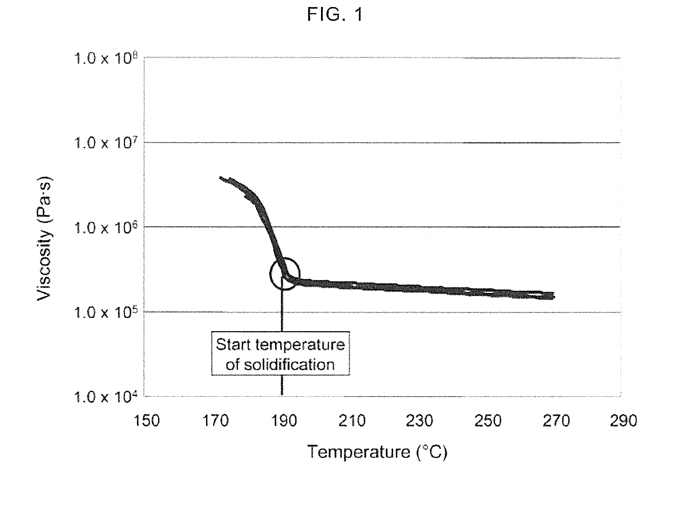

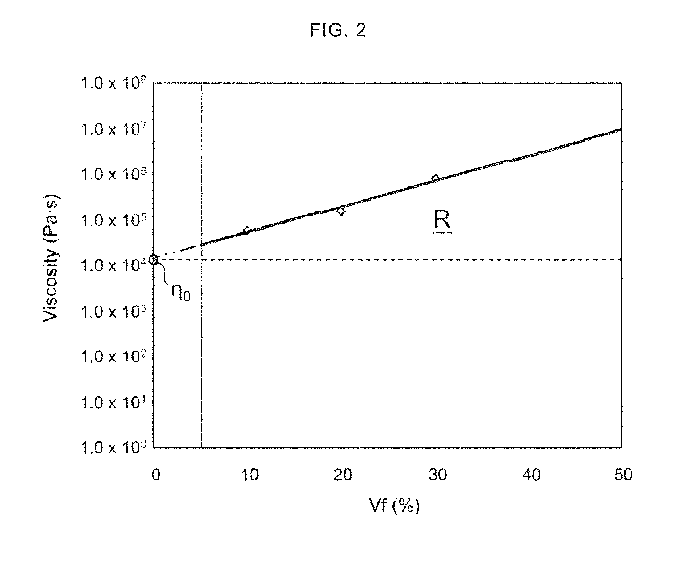

First, in a stampable sheet according to the present invention, the viscosity η of the stampable sheet in a state where the matrix resin in the stampable sheet is molten is defined to be in a range of η₀ ≤ η < η₀exp(0.20Vf) (Pa·s). Where, as shown in Fig. 1 as a concept diagram with respect to the characteristics of the stampable sheet, when the temperature becomes high, the matrix resin melts at a certain temperature and the viscosity exhibits an approximately constant value at a temperature higher than the certain temperature. This temperature at which the matrix resin begins to melt can be perceived as a solidification start temperature of the matrix resin during a step of lowering the temperature from the molten state. Therefore, in the present invention, the stampable sheet viscosity η, which exhibits an approximately constant value regardless of the temperature change as described above, is defined as a viscosity at a temperature of the solidification start temperature of the matrix resin + 50°C, and the stampable sheet viscosity η, which can be thus perceived, is defined in the above-described range using the viscosity η₀ of the matrix resin. The viscosity η₀ of the matrix resin can be determined as shown in Fig. 2. Namely, when the viscosity η of a stampable sheet is measured (measured points: indicated as black square points) in relation to the Vf (carbon fiber content (%)per unit volume of the stampable sheet), as shown in Fig. 2, an approximately linear characteristic line can be obtained in a semilogarithmic graph. The value at which the characteristic line crosses the vertical axis of viscosity η when the characteristic line is extended up to a position of Vf = 0% can be obtained as a hypothetical resin viscosity of the molten resin (namely, it is a viscosity of the matrix resin alone determined by the characteristic line of the viscosity η). The range of the viscosity η of a stampable sheet is defined as described above relatively to the thus determined viscosity η₀ of the matrix resin. Namely, the range of the viscosity η of a stampable sheet defined in the present invention is a range depicted as a region R surrounded by the line of the viscosity η₀ of the matrix resin (depicted as a dotted line) and the characteristic line of the viscosity η (depicted as a solid line) in Fig. 2.

Next, although the carbon fibers used in the present invention are not particularly restricted, high-strength and high-elastic modulus carbon fibers can be used, and one kind of carbon fibers may be used or two or more kinds of carbon fibers may be used together. In particular, carbon fibers such as PAN-based, pitch-based and rayon-based ones can be exemplified. From the viewpoint of the balance between the strength and the elastic modulus of a molded article to be obtained, PAN-based carbon fibers are more preferable. The density of carbon fibers is preferably in a range of 1.65 to 1.95 g/cm³, and more preferably in a range of 1.70 to 1.85 g/cm³. If the density is too high, the lightness in weight of a carbon fiber-reinforced plastic obtained is poor, and if too low, there is a possibility where the mechanical properties of a carbon fiber-reinforced plastic obtained become low.

Further, the carbon fibers are preferably formed as a bundle from the viewpoint of productivity, and it is preferred that the number of single fibers in the bundle is many. The number of single fibers for the carbon fiber bundle can be employed within a range of 1,000 to 350,000, and in particular, it is preferably employed within a range of 10,000 to 100,000. However, the carbon fiber bundle is required to satisfy the conditions defined in the present invention.

The single fiber flexural stiffness of carbon fibers is, as aforementioned, preferably in a range of 1.0×10⁻¹¹ to 2.8×10⁻¹¹ Pa·m⁴, and more preferably in a range of 1.0×10⁻¹¹ to 1.5×10⁻¹¹ Pa·m⁴. Such a single fiber flexural stiffness in the above-described range makes it possible, in the process for manufacturing carbon fiber aggregates described later, to stabilize the quality of carbon fiber aggregates obtained.

Further, for the purpose of improving the adhesive property between carbon fibers and a matrix resin and the like, it is preferred that the carbon fibers are surface treated. As a method of the surface treatment, there are electrolytic treatment, ozone treatment, ultraviolet treatment, etc. Further, for the purpose of preventing the fuzz generation of carbon fibers, improving the convergence of carbon fibers, improving the adhesive property between carbon fibers and a matrix resin, and the like, a sizing agent may be provided to the carbon fibers. As a sizing agent, a compound having a functional group such as an epoxy group, a urethane group, an amino group, and a carboxyl group can be used, and one kind or two or more kinds of these compounds may be used.

Further, as a sizing treatment, a treatment method is employed wherein a liquid containing a sizing agent (a sizing liquid) is provided after drying wet carbon fiber bundles which are wetted by water and have a moisture content of about 20 to about 80 wt% by generally known surface treatment process and washing process.

Although the method for providing a sizing agent is not particularly restricted, for example, typical examples of the method include a method for dipping the fibers into a sizing liquid via rollers, a method for bringing the fibers into contact with a roller adhered with a sizing agent, and a method for spraying an atomized sizing agent. Further, although any of a batch type and a continuous type may be employed, a continuous type is preferred because it provides a good productivity and helps to minimize the degree of variation. At that time, in order that the adhesion amount of the effective components of the sizing agent relative to the carbon fibers can become uniform within an adequate range, it is preferred to control the concentration and the temperature of the sizing agent, the tension of the yarns, etc. Further, it is more preferred to vibrate the carbon fibers by a ultrasonic wave at the time of providing the sizing agent.

Although the temperature and the time for drying should be adjusted depending upon the adhesion amount of the compound, from the viewpoints of completely removing the solvent used for providing the sizing agent, shortening the time required for the drying, on the other hand, preventing the heat deterioration of the sizing agent and preventing the carbon fiber bundles from being grown stiff and being deteriorated with the bundle spreading property, the temperature for drying is preferably 150°C or higher and 350°C or lower, and more preferably 180°C or higher and 250°C or lower.

The adhesion amount of a sizing agent relative to the mass of only the carbon fibers is preferably 0.01 mass% or more and 10 mass% or less, more preferably 0.05 mass% or more and 5 mass% or less, and further preferably 0.1 mass% or more and 5 mass% or less. If less than 0.01 mass%, the effect for improving the adhesive property is hardly exhibited. If more than 10 mass%, there is a possibility where the properties of a molded article may be reduced.

In the present invention, a thermoplastic resin is used as a matrix resin. The material of the thermoplastic matrix resin is not particularly restricted, and it can be appropriately selected within a range that does not greatly reduce the mechanical properties of the carbon fiber-reinforced plastic as a molded article. For example, a polyolefin-based resin such as polyethylene or polypropylene, a polyamide-based resin such as nylon 6 or nylon 6,6, a polyester-based resin such as polyethylene terephthalate or polybutylene terephthalate, or a resin such as a polyphenylene sulfide, a polyetherketone, a polyethersulfone, or an aromatic polyamide, can be used. Among them, the thermoplastic resin preferably comprises any of polyamide, polypropylene and polyphenylene sulfide.

Typical examples of the process for obtaining carbon fiber aggregates include carding and air laid. The carding mentioned in the present invention means an operation for arranging the direction of discontinuous fibers or unraveling fibers by applying a shear force in an approximately same direction to the aggregates of discontinuous carbon fibers with a comb-like member. Generally, it is performed using a carding machine equipped with a roll having many needle-like projections on the surface and/or a roll wound with a metallic wire having saw blade-like projections.

When such a carding is carried out, it is preferred to shorten the time (residence time) during which carbon fibers are present in the carding machine, for the purpose of preventing the carbon fibers from being folded. More specifically, it is preferred to transfer the carbon fibers existing on the wires wound onto a cylinder roll of a carding machine to a doffer roll in minimal time. Therefore, in order to accelerate such a transfer, it is preferred to rotate the cylinder roll at a high rotational speed, for example, 250 rpm or higher. Further, for the same reason, it is preferred that the surface speed of the doffer roll is set at a high speed, for example, 10m/min. or higher.

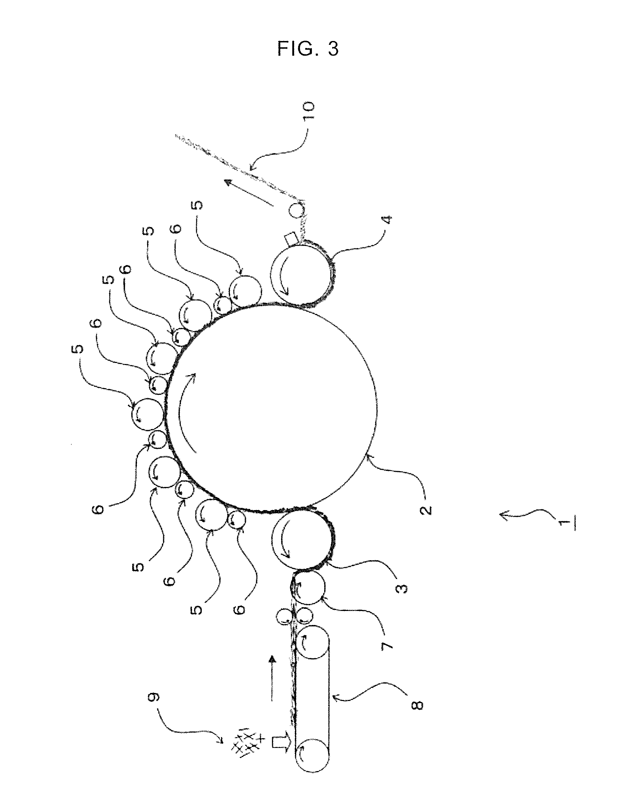

The process for carding the carbon fiber bundles is not particularly restricted, and a general one can be used. For example, as shown in Fig. 3, carding machine 1 mainly comprises a cylinder roll 2, a take-in roll 3 provided at an upstream side and closely to the outer circumferential surface of the cylinder roll 2, a doffer roll 4 provided closely to the outer circumferential surface of the cylinder roll 2 at a downstream side which is a side opposite to the side of the take-in roll 3, a plurality of worker rolls 5 provided closely to the outer circumferential surface of the cylinder roll 2 between the take-in roll 3 and the doffer roll 4, stripper rolls 6 provided closely to the worker rolls 5, a feed roll 7 provided closely to the take-in roll 3, and a belt conveyer 8.

Discontinuous carbon fiber bundles 9 are supplied to belt conveyer 8, and the carbon fiber bundles 9 are introduced onto the outer circumferential surface of cylinder roll 2 through the outer circumferential surface of feed roll 7 and then through the outer circumferential surface of take-in roll 3. Up to this stage, the carbon fiber bundles 9 are refined and become floc-like aggregates of carbon fiber bundles. Although a part of the floc-like aggregates of carbon fiber bundles introduced onto the outer circumferential surface of cylinder roll wind around the outer circumferential surface of worker rolls 5, these carbon fibers are stripped off by stripper rolls 6 and returned again onto the outer circumferential surface of the cylinder roll 2. Many needles, projections exist at standing conditions on the outer circumferential surfaces of the respective rolls of feed roll 7, take-in roll 3, cylinder roll 2, worker rolls 5 and stripper rolls 6, and in the above-described steps, by the operation of the needles, the carbon fiber bundles are refined into predetermined-condition bundles, and oriented to some extent. The carbon fiber bundles, refined into predetermined-condition bundles through such steps, move onto the outer circumferential surface of doffer roll 4 as a sheet-like web 10 which is one form of the carbon aggregates.

As for air laid, it is not particularly restricted too, and a general method can be used. Examples of general air laid processes include Honshu Paper process, Kroyer process, Danweb process, J&J process, KC process, Scott process, etc. (refer to "Base and application of non-woven fabric" (Non-woven fabric seminar in Japan Fibrous Machine Society, published in 1993)). More specifically, the examples include a process having a step of introducing cut carbon fiber bundle single materials or cut carbon fiber bundles and thermoplastic resin fibers into a tube, a step of blowing compressed air to refine fibers, and a step of obtaining carbon fiber aggregates which are dispersed and fixed; and a process having a step of refining cut carbon fiber bundle single materials or cut carbon fiber bundles and thermoplastic resin fibers by a refining means (for example, a pin cylinder) to form a carbon fiber nonwoven fabric as carbon fiber aggregates.

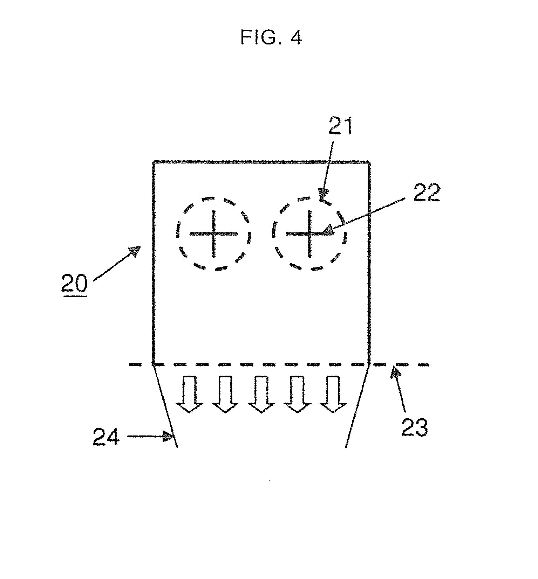

Fig. 4 is a schematic configuration diagram showing an example of an air laid machine. In Fig. 4, air laid machine 20 has drums 21 rotated in directions reverse to each other, each formed in a cylinder shape and having small holes, pin cylinders 22 provided in the respective drums 21, wires 23 running under the drums 21, and suction box 24 provided under the wires 23. When carbon fiber bundle single materials or carbon fiber bundles and thermoplastic resin fibers are supplied to air laid machine 20, these fibers are air transported to drums 21 together with a large amount of air, they are refined by pin cylinders 22 in drums 21, discharged from the small holes, and they drop onto wires 23 running thereunder. Where, the air used for the air transportation is sucked into suction box 24, and only refined carbon fiber bundle single materials or refined carbon fiber bundles and thermoplastic resin fibers are left on wires 23 to form a carbon fiber nonwoven fabric.

Where, the carbon fiber aggregates, as referred to herein, mean aggregates which are in a state where discontinuous carbon fiber bundles are refined and oriented by the above-described carding or air laid, and in which their configuration is maintained by entanglement or friction between fibers. Examples of such carbon fiber aggregates include a thin sheet-like web and a nonwoven fabric made of laminated webs that are, when necessary, entangled or adhered together.

The carbon fiber aggregates may comprise only carbon fiber bundle single materials, or may include carbon fiber bundles and thermoplastic resin fibers. It is preferred to add thermoplastic resin fibers because it makes it possible to prevent carbon fibers from fracturing in the carding or air laid process. Carbon fibers are difficult to twine around and liable to break, because they are rigid and brittle. Therefore, carbon fiber aggregates consisting of only carbon fibers have potential problems that they are liable to be cut off and the carbon fibers are liable to fall out. Carbon fiber aggregates containing thermoplastic resin fibers, which are flexible, resistant to breakage and liable to twine, make it possible to form carbon fiber aggregates having a high uniformity. In the present invention, when carbon fiber aggregates include thermoplastic resin fibers, the ratio of carbon fiber content in the carbon fiber aggregates is preferably in a range of 20-95 wt%, more preferably in a range of 50-95 wt%, and further preferably in a range of 70-95 wt%. If the ratio of carbon fiber content is too low, it becomes difficult to obtain high mechanical properties when manufacturing carbon fiber composite material. On the other hand, if the ratio of carbon fiber content is too high, the above-described effect to promote the uniformity of carbon fiber aggregates cannot be obtained.

In the present invention, when carbon fiber aggregates contain thermoplastic resin fibers, the fiber length of thermoplastic resin fibers are not particularly limited as long as it is in a range to achieve the object of the present invention, such as configuration preservation of carbon fiber aggregates and prevention of fallout of carbon fibers. In general, thermoplastic resin fibers having a fiber length of approximately 10-100 mm can be used. Where, the fiber length of thermoplastic resin fibers can be determined in relation to the fiber length of carbon fibers. For example, a greater tension is applied to a fiber having a longer fiber length at the time of elongating carbon fiber aggregates. Therefore, in the case of aligning carbon fibers in the longitudinal direction of carbon fiber aggregates by applying tension to carbon fibers, it is possible to configure the fiber length of the carbon fibers to be longer than the fiber length of thermoplastic resin fibers; and in the opposite case, it is possible to configure the fiber length of the carbon fibers to be shorter than the fiber length of thermoplastic resin fibers.

Further, it is preferred to provide a crimp to the above-described thermoplastic resin fibers for the objective of enhancing the effect of tangle due to the thermoplastic resin fibers. The degree of the crimp is not particularly limited as long as it is in a range capable of achieving the objective of the present invention, and generally, thermoplastic resin fibers having a number of crimps in a range of approximately 5 to 25 crests per 25 mm and a rate of crimp in a range of approximately 3 to 30% can be used.

The material for such thermoplastic resin fibers is not particularly restricted, and it can be selected suitably within a range that does not greatly reduce the mechanical properties of the carbon fiber composite material. For example, it is possible to use fibers which are prepared by spinning a resin such as a polyolefin-group resin such as polyethylene or polypropylene, a polyamide-group resin such as nylon 6 or nylon 6,6, a polyester-group resin such as polyethylene terephthalate or polybutylene terephthalate, a polyetherketone, a polyethersulfone or an aromatic polyamide. It is preferred that such a material for thermoplastic resin fibers is appropriately selected in accordance with the combination with a matrix resin. In particular, thermoplastic resin fibers prepared using the same resin as a matrix resin, a resin having a compatibility with a matrix resin or a resin having a high adhesive property with a matrix resin is preferred, because the mechanical properties of a carbon fiber-reinforced plastic are not lowered. For example, the thermoplastic resin fibers are preferred to be composed of at least one kind of fibers selected from the group consisting of polyamide fibers, polyphenylene sulfide fibers, polypropylene fibers, polyetheretherketone fibers and phenoxy resin fibers.

In the present invention, when a matrix resin is impregnated into the carbon fiber aggregates, a method may be employed wherein carbon fiber aggregates containing thermoplastic resin fibers are prepared and the thermoplastic resin fibers contained in the carbon fiber aggregates are used as the matrix resin as they are, or a method may also be employed wherein carbon fiber aggregates not containing thermoplastic resin fibers are used as a raw material, and a matrix resin is impregnated at an arbitrary stage for producing a carbon fiber composite material. Further, even in case where carbon fiber aggregates containing thermoplastic resin fibers are used as the raw material, a matrix resin can be impregnated at an arbitrary stage for producing a carbon fiber composite material. In such a case, a resin forming thermoplastic resin fibers and a matrix resin may be an identical resin, and may be resins different from each other. In case where the resin forming thermoplastic resin fibers and the matrix resin are different from each other, it is preferred that both resins have a compatibility or a high affinity.

When the stampable sheet comprising the carbon fiber composite material is produced, a thermoplastic resin as a matrix resin is impregnated into the above-described carbon fiber aggregates, and the impregnation step for manufacturing the carbon fiber composite material can be carried out using a press machine having a heating function. The press machine is not particularly restricted as long as it can realize temperature and pressure required for the impregnation of the matrix resin, a usual press machine having a plane-like platen moved vertically, or a so-called double belt press machine having a mechanism for running a pair of endless steel belts can be used. In such an impregnation step, after the matrix resin is prepared in a sheet-like form such as a film, a nonwoven fabric or a woven fabric, it is laminated with the carbon fiber aggregates, and at that condition, the matrix resin can be melted and impregnated using the above-described press machine. Further, a method can also be employed wherein discontinuous fibers are prepared using a matrix resin, by mixing them and inorganic fibers at a step for making carbon fiber aggregates, carbon fiber aggregates containing the matrix resin and the inorganic fibers are prepared, and the carbon fiber aggregates are heated and pressed using the press machine and the like.

The carbon fiber content Vf (%) per unit volume of a stampable sheet comprising carbon fiber composite material is preferably in a range of 5 ≤ Vf < 80 (%), more preferably in a range of 5 ≤ Vf ≤ 70 (%), and further preferably in a range of 10 ≤ Vf ≤ 50 (%). If the value of Vf becomes less than 5%, there is a fear that the reinforcing effect by the carbon fibers may become small. Further, if the value of Vf becomes 80% or more, it becomes difficult to secure high flowability and there is a fear that it may become difficult to mold the stampable sheet.

Next, Examples and Comparative Examples in the present invention will be explained.

First, the properties and determination methods used in the Examples and Comparative Examples will be explained.

### (1) Method for determining bundles

A sample with a size of 100mm x 100mm was cut out from a carbon fiber composite material, and thereafter, the sample was heated in an electric furnace heated at 500 °C for about 1 hour to burn off organic substances such as the matrix resin. After cooled down to room temperature, the mass of the residual carbon fiber aggregates was determined, and thereafter carbon fiber bundles were all extracted from the carbon fiber aggregates by a pincette. With respect to all the extracted carbon fiber bundles, using a balance capable of measuring up to a degree of 1/10,000 g, the weigh Mn and the length Ln of each carbon fiber bundle are determined. After the determination, for each bundle, Mn/Ln, Mn/(Ln x D) and xₙ = Mn/(Ln x F) are calculated. Where, D is a diameter of carbon fibers, F is a fineness of carbon fibers, and xₙ is a number of fibers forming a carbon fiber bundle. The determination is carried out at a condition where fiber bundles in which the value of Mn/(Ln x D) is less than 8.5 x 10⁻¹ mg/mm² are referred to as carbon fiber bundles (A) and the total weight of the carbon fiber bundles (A) is referred to as M_{A}. Further, the determination is carried out at a condition where carbon fiber bundles in which Mn/(Ln x D) is 8.5 x 10⁻¹ mg/mm² or more are referred to as carbon fiber bundles (B), the total weight of the carbon fiber bundles (B) is referred to as M_{B} and the total number of the bundles is referred to as N_{B}. For fiber bundles refined to a degree at which the bundles cannot be extracted by a pincette, the weight thereof was determined in the lump at the last. Further, in a case where the fiber length is so small that the determination of weight becomes difficult, the fiber length may be classified at an interval of about 0.2 mm and the weights of a plurality of classified bundles may be determined in the lump, and an average value thereof may be used. After classifying and determining all bundles, for the carbon fiber bundles (A), Z=M_{A}/(M_{A} + M_{B}) x 100 (wt%) is calculated to obtain the ratio Z of carbon fiber bundles (A) to the total weight of carbon fibers. Next, for the carbon fiber bundles (B), Y=M_{B}/(M_{A} + M_{B}) x 100 (wt%), X=∑(Mn/Ln)/N_{B}, x=∑{Mn/(Ln x F)}/N_{B} and σ={1/N_{B} x ∑(xₙ - x)²}^{1/2} are calculated to obtain the ratio Y of carbon fiber bundles (B) to the total weight of carbon fibers, the average value X of Mn/Ln in carbon fiber bundles (B), the average value x of number of fibers forming a fiber bundle, and the standard variation σ of number of fibers forming a fiber bundle.

### (2) Viscosity

The viscosity is determined using APA2000 (supplied by ALPHA TECHNOLOGIES, Inc.) as follows: a sample having a size of 4.3cm³ is interposed between parallel plates, the temperature is raised to a temperature of the melting point +60 °C, the viscosity is measured under conditions where the frequency is 1Hz and the strain is 5% while cooling down the temperature at a speed of 10 °C /min., and thereafter the viscosity of the sample is determined as a value of viscosity (Pa·s) at the solidification start temperature at which the viscosity begins to increase sharply.

### (3) Vf (carbon fiber content in stampable sheet)

A sample of about 2g was cut off from a molded article of a stampable sheet, and the mass thereof was determined. Thereafter, the sample was heated in an electric furnace heated at 500°C for one hour to burn off organic substances such as matrix resin. After cooled down to room temperature, the mass of the residual carbon fibers was determined. The rate of the mass of the carbon fibers to the mass of the sample before being burnt off with organic substances such as matrix resin was determined, and it was defined as the percentage content of carbon fibers.

### (4) Flexural strength

A flexural strength was determined on the basis of JIS-K7171. For the flexural strength, the CV value (coefficient of variation [%]) was also calculated. In a case where the CV value was less than 5 %, the variance of the flexural strength was small and judged as 'good (○)'; and, in a case where the CV value was 5 % or more, the variance of the flexural strength was large and judged as 'bad (×)'

### (5) Single fiber flexural stiffness (Pa·m⁴)

It was calculated by Single fiber flexural stiffness = E x I.

Here, E: single fiber elastic modulus, I: geometrical moment of inertia.

The cross section of a fiber was supposed as a true circle, the geometrical moment of inertia I was determined from the fiber diameter D, and the flexural stiffness was determined from the single fiber tensile elastic modulus E and the geometrical moment of inertia I.

### (6) Evaluation of flowability [Flow test (stamping molding)]

After two sheets of carbon fiber composite materials each having a size of 100 mm x 100 mm x 2 mm were preheated at 240°C, the two sheets were stacked and placed on a press table heated at 80°C, and pressed at 10 MPa for 30 seconds. The area of the sheet after this pressing A2 and the area before the pressing A1 were measured, and A2/A1 was determined as a flowability (%).

### Examples

First, carbon fibers and carbon fiber bundles (before cutting) used in Examples and Comparative Examples of the present invention will be explained. Carbon fiber (1) and Carbon fiber bundle:
A continuous carbon fiber bundle having a fiber diameter of 7 µm, a tensile elastic modulus of 230 GPa, a single fiber flexural stiffness of 2.71 x 10⁻¹¹ Pa·m⁴ and a number of filaments of 12,000.
   Carbon fiber (2) and Carbon fiber bundle:
A continuous carbon fiber bundle having a fiber diameter of 5.5 µm, a tensile elastic modulus of 294 GPa, a single fiber flexural stiffness of 1.32 x 10⁻¹¹ Pa·m⁴ and a number of filaments of 12,000.

### Example 1:

The carbon fiber bundle (1) was cut at a fiber length of 25 mm, the cut carbon fiber bundles and nylon 6 short fibers (fineness of short fiber: 1.7 dtex, cut length: 51 mm, number of crimps: 12 crests per 25 mm, rate of crimp: 15%) were mixed at a mass ratio of 90:10, and the mixture was introduced into a carding machine. The web having come out was cross wrapped to form sheet-like carbon fiber aggregates comprising carbon fibers and nylon 6 fibers and having an areal weight of 100g/cm². In the obtained carbon fiber aggregates, the ratio Z of carbon fiber bundles (A) to the total weight of carbon fibers was 85 wt%, the ratio Y of carbon fiber bundles (B) to the total weight of carbon fibers was 15 wt%, the average value X of Mn/Ln was 0.01 mg/mm, the average value x of number of fibers forming a fiber bundle was 144 and the standard variation σ of number of fibers forming a fiber bundle was 88.

The winding direction of the sheet-like carbon fiber aggregates was referred to as 0°, sheets of the carbon fiber aggregates were stacked, and further, after a nonwoven fabric comprising nylon resin ("CM1001", ηr = 2.3, supplied by Toray Industries, Inc.) was stacked so that the volume ratio of the carbon fibers to the thermoplastic resin fibers became 20:80 as the whole of the stacked carbon fiber aggregates, the whole was nipped by stainless plates, and after preheating at 250°C for 90 seconds, it was hot pressed at 250°C for 180 seconds while being applied with a pressure of 1.0 MPa. Then, it was cooled down to 50°C at the pressed condition to obtain a flat plate of carbon fiber composite material having a thickness of 2 mm. When the flexural strengths in 0° and 90° directions were determined relative to the 0° direction of the surface layer of the obtained flat plate, the average value of the flexural strengths in 0° and 90° directions was 365 MPa, and the CV value was less than 5%.

When a sample having a size of 100 mm x 100 mm was cut out from the obtained flat plate and the flow test and the viscosity determination test were performed, the flowability was 150%, the viscosity η was 5.0 x 10⁵ Pa·s and η₀ was 1.5 x 10⁴ Pa·s. The conditions and the results of the determinations and the evaluations are shown in Table 1.

### Example 2:

A flat plate of carbon fiber composite material was obtained in a manner similar to that of Example 1 except that the carbon fiber bundle (1) was cut at a fiber length of 15 mm, carbon fiber aggregates in which the ratio Z of carbon fiber bundles (A) to the total weight of carbon fibers was 65 wt%, the ratio Y of carbon fiber bundles (B) to the total weight of carbon fibers was 35 wt%, the average value X of Mn/Ln was 0.017 mg/mm, the average value xof number of fibers forming a fiber bundle was 246 and the standard variation σ of number of carbon fibers forming a fiber bundle was 110 were stacked to obtain a flat plate of carbon fiber composite material having a thickness of 2 mm. When the flexural strengths in 0° and 90° directions were determined relative to the 0° direction of the surface layer of the obtained flat plate, the average value of the flexural strengths in 0° and 90° directions was 360 MPa, and the CV value of the flexural strength was less than 5%.

When a sample having a size of 100 mm x 100 mm was cut out from the obtained flat plate and the flow test and the viscosity determination test were performed, the flowability was 170%, the viscosity η was 3.0 x 10⁵ Pa·s and η₀ was 1.5 x 10⁴ Pa·s.

### Examples 3 to 6:

They were carried out under conditions similar to Example 2 except that the average value X of Mn/Ln, the average value x of number of fibers forming a fiber bundle, the standard variation σ of number of fibers forming a fiber bundle, the Vf, etc. were changed from Example 2. The results were shown in Table 1.

### Example 7:

It was carried out in a manner similar to Example 6 except that a melt flow nonwoven fabric comprising nylon resin ("CM1041", ηr = 4.3, supplied by Toray Industries, Inc.) was used, carbon fiber aggregates in which the ratio Z of carbon fiber bundles (A) to the total weight of carbon fibers was 55 wt%, the ratio Y of carbon fiber bundles (B) to the total weight of carbon fibers was 45 wt%, the average value X of Mn/Ln was 0.027 mg/mm, the average value x of number of fibers forming a fiber bundle was 390 and the standard variation σ of number of fibers forming a fiber bundle was 250 were stacked, and a flat plate of carbon fiber composite material having a thickness of 2 mm was obtained. When the flexural strengths in 0° and 90° directions were determined relative to the 0° direction of the surface layer of the obtained flat plate, the average value of the flexural strengths in 0° and 90° directions was 350 MPa, and the CV value of the flexural strength was less than 5%.

When a sample having a size of 100 mm x 100 mm was cut out from the obtained flat plate and the flow test and the viscosity determination test were performed, the flowability was 230%, the viscosity η was 5.5 x 10⁴ Pa·s and η₀ was 1.8 x 10⁴ Pa·s.

### Example 8:

It was carried out in a manner similar to Example 6 except that the fiber length L of carbon fibers was changed. The results were shown in Table 1.

### Example 9:

It was carried out in a manner similar to Example 1 except that the carbon fiber bundle (2) was cut at a fiber length of 15 mm, carbon fiber aggregates in which the ratio Z of carbon fiber bundles (A) to the total weight of carbon fibers was 50 wt%, the ratio Y of carbon fiber bundles (B) to the total weight of carbon fibers was 50 wt%, the average value X of Mn/Ln was 0.025 mg/mm, the average value x of number of fibers forming a fiber bundle was 585 and the standard variation σ of number of carbon fibers forming a fiber bundle was 350 were stacked, and a flat plate of carbon fiber composite material having a thickness of 2 mm was obtained. When the flexural strengths in 0° and 90° directions were determined relative to the 0° direction of the surface layer of the obtained flat plate, the average value of the flexural strengths in 0° and 90° directions was 400 MPa, and the CV value of the flexural strength was less than 5%.

When a sample having a size of 100 mm x 100 mm was cut out from the obtained flat plate and the flow test and the viscosity determination test were performed, the flowability was 300%, the viscosity η was 2.0 x 10⁴ Pa·s and η₀ was 1.5 x 10⁴ Pa·s.

### Example 10:

It was carried out in a manner similar to Example 9 except that the fiber length L, the ratio of carbon fiber bundles (B), the average value X of Mn/Ln, the average value x of number of fibers forming a fiber bundle and the standard variation σ of number of fibers forming a fiber bundle were changed. The results were shown in Table 1.

### Example 11:

The carbon fiber bundle (1) was cut at a fiber length of 15 mm, the cut carbon fiber bundles and nylon 6 short fibers (fineness of short fiber: 1.7 dtex, cut length: 10 mm) were mixed at a mass ratio of 80:20, and the mixture was introduced into an air laid machine. The nonwoven fabric having come out was heat treated to form sheet-like carbon fiber aggregates comprising carbon fibers and nylon 6 fibers and having an areal weight of 200g/cm². In the obtained carbon fiber aggregates, the ratio Z of carbon fiber bundles (A) to the total weight of carbon fibers was 30 wt%, the ratio Y of carbon fiber bundles (B) to the total weight of carbon fibers was 70 wt%, the average value X of Mn/Ln was 0.028 mg/mm, the average value x of number of fibers forming a fiber bundle was 400 and the standard variation σ of number of fibers forming a fiber bundle was 315.

The winding direction of the sheet-like carbon fiber aggregates was referred to as 0°, sheets of the carbon fiber aggregates were stacked, and further, after a nonwoven fabric comprising co-polymerized nylon resin ("E3500", supplied by Toray Industries, Inc.) was stacked so that the volume ratio of the carbon fibers to the thermoplastic resin fibers became 20:80 as the whole of the stacked carbon fiber aggregates, the whole was nipped by stainless plates, and after preheating at 250°C for 90 seconds, it was hot pressed at 250°C for 180 seconds while being applied with a pressure of 1.0 MPa. Then, it was cooled down to 50°C at the pressed condition to obtain a flat plate (stampable sheet) of carbon fiber composite material having a thickness of 2 mm. When the flexural strengths in 0° and 90° directions were determined relative to the 0° direction of the surface layer of the obtained flat plate, the average value of the flexural strengths in 0° and 90° directions was 330 MPa, and the CV value was less than 5%.

When a sample having a size of 100 mm x 100 mm was cut out from the obtained flat plate and the flow test and the viscosity determination test were performed, the flowability was 370%, the viscosity η was 1.1 x 10⁴ Pa·s and η₀ was 3.0 x 10³ Pa·s. The conditions and the results of the determinations and the evaluations are shown in Table 2.

### Examples 12 to 13:

They were carried out in a manner similar to Example 11 except that the Vf was changed. The results were shown in Table 2.

### Examples 14 to 16:

They were carried out in a manner similar to Example 1 except that the ratio Z of carbon fiber bundles (A) to the total weight of carbon fibers, the ratio Y of carbon fiber bundles (B), the average value X of Mn/Ln, the average value x of number of fibers forming a fiber bundle, the standard variation σ of number of fibers forming a fiber bundle, the Vf, the resin, etc. were changed from Example 1. The results were shown in Table 2.

### Comparative Example 1:

The carbon fiber bundle (1) was cut at a fiber length of 15 mm, the cut carbon fiber bundles were uniformly dispersed on a matched die mold having a size of 300mm x 300mm, a nylon resin melt blow nonwoven fabric ("CM1001" , ηr = 2.3, supplied by Toray Industries, Inc.) was stacked so that the volume ratio of the carbon fibers to the thermoplastic resin fibers became 20:80, and carbon fiber aggregates in which the ratio Z of carbon fiber bundles (A) to the total weight of carbon fibers was 1 wt%, the ratio Y of carbon fiber bundles (B) to the total weight of carbon fibers was 99 wt%, the average value X of Mn/Ln was 0.55 mg/mm, the average value x of number of fibers forming a fiber bundle was 7944 and the standard variation σ of number of fibers forming a fiber bundle was 955 were stacked to obtain a flat plate of carbon fiber composite material having a thickness of 2 mm. When the flexural strengths in 0° and 90° directions were determined relative to the 0° direction of the surface layer of the obtained flat plate, the average value of the flexural strengths in 0° and 90° directions was 200 MPa, and the CV value was more than 5%. The result was shown in Table 3.

### Comparative Example 2:

It was carried out in a manner similar to Example 1 except that the carbon fiber bundle (1) was cut at a fiber length of 15 mm, carbon fiber aggregates in which the ratio Z of carbon fiber bundles (A) to the total weight of carbon fibers was 95 wt%, the average value X of Mn/Ln was 0.01 mg/mm, the average value x of number of fibers forming a fiber bundle was 140 and the standard variation σ of number of carbon fibers forming a fiber bundle was 40 were stacked to obtain a flat plate of carbon fiber composite material having a thickness of 2 mm. When the flexural strengths in 0° and 90° directions were determined relative to the 0° direction of the surface layer of the obtained flat plate, the average value of the flexural strengths in 0° and 90° directions was 365 MPa, and the CV value of the flexural strength was less than 5%.

When a sample having a size of 100 mm x 100 mm was cut out from the obtained flat plate and the flow test and the viscosity determination test were performed, the flowability was only 120%, the viscosity η was 5.0 x 10⁵ Pa·s and η₀ was 1.5 x 10⁴ Pa·s.

**[Table 1]**

| Examples | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Carbon fiber | | Carbon fiber (1) | Carbon fiber (1) | Carbon fiber (1) | Carbon fiber (1) | Carbon fiber (1) | Carbon fiber (1) | Carbon fiber (1) | Carbon fiber (1) | Carbon fiber (2) | Carbon fiber (2) |
| Single fiber flexural stiffness | [Pa·m⁴] | 2.71 x 10⁻¹¹ | 2.71 x 10⁻¹¹ | 2.7 x 10⁻¹¹ | 2.71 x 10⁻¹¹ | 2.71 x 10⁻¹¹ | 2.71 x 10⁻¹¹ | 2.71 x 10⁻¹¹ | 2.71 x 10⁻¹¹ | 1.32 x 10⁻¹¹ | 1.32 x 10⁻¹¹ |
| D: fiber diameter | [µm] | 7 | 7 | 7 | 7 | 7 | 7 | 7 | 7 | 5.5 | 5.5 |
| L: fiber length | [mm] | 25 | 15 | 15 | 15 | 15 | 15 | 15 | 25 | 15 | 10 |
| Z: ratio of carbon fiber bundles (A) | [%] | 85 | 65 | 65 | 65 | 65 | 55 | 55 | 55 | 50 | 45 |
| Y: ratio of carbon fiber bundles (B) | [%] | 15 | 35 | 35 | 35 | 35 | 45 | 45 | 45 | 50 | 55 |
| X: average value of Mn/Ln | [mg/mm] | 0.01 | 0.017 | 0.024 | 0.024 | 0.024 | 0.027 | 0.027 | 0.027 | 0.025 | 0.026 |
| Resin | | CM1001 | CM1001 | CM1001 | CM1001 | CM1001 | CM1001 | CM1041 | CM1001 | CM1001 | CM1001 |
| Vf | [%] | 20 | 20 | 20 | 10 | 30 | 20 | 20 | 20 | 20 | 20 |
| Flowability | [%] | 150 | 170 | 200 | 240 | 150 | 255 | 230 | 200 | 300 | 320 |
| Flexural strength JIS-K7171 | [MPa] | 365 | 360 | 350 | 280 | 470 | 345 | 350 | 350 | 400 | 390 |
| CV value | [%] | ○ | ○ | ○ | ○ | ○ | ○ | ○ | ○ | ○ | ○ |
| η₀ | [Pa·s] | 1.5 x 10⁴ | 1.5 x 10⁴ | 1.5 x 10⁴ | 1.5 x 10⁴ | 1.5 x 10⁴ | 1.5 x 10⁴ | 1.8 x 10⁴ | 1.5 x 10⁴ | 1.5 x 10⁴ | 1.5 x 10⁴ |
| η | [Pa·s] | 5.0 x 10⁵ | 3.0 x 10⁵ | 1.6 x 10⁵ | 6.0 x 10⁴ | 8.0 x 10⁵ | 5.0 x 10⁴ | 5.5 x 10⁴ | 8.0 x 10⁴ | 2.0 x 10⁴ | 1.9 x 10⁴ |
| x: average of number of bundle-forming fibers | [number of fibers] | 144 | 246 | 350 | 350 | 350 | 390 | 390 | 390 | 585 | 608 |
| σ: standard variation | [number of fibers] | 88 | 110 | 230 | 230 | 230 | 250 | 250 | 250 | 350 | 360 |

**[Table 2]**

| Examples | | Example 11 | Example 12 | Example 13 | Example 14 | Example 15 | Examples 16 |
|---|---|---|---|---|---|---|---|
| Carbon fiber | | Carbon fiber (1) | Carbon fiber (1) | Carbon fiber (1) | Carbon fiber (1) | Carbon fiber (1) | Carbon fiber (1) |
| Single fiber flexural stiffness | [Pa·m⁴] | 2.71 x 10⁻¹¹ | 2.71 x 10⁻¹¹ | 2.71 x 10⁻¹¹ | 2.71 x 10⁻¹¹ | 2.71 x 10⁻¹¹ | 2.71 x 10⁻¹¹ |
| D: fiber diameter | [µm] | 7 | 7 | 7 | 7 | 7 | 7 |
| L: fiber length | [mm] | 15 | 15 | 15 | 15 | 15 | 15 |
| Z: ratio of carbon fiber bundles (A) | [%] | 30 | 30 | 30 | 60 | 60 | 60 |
| Y: ratio of carbon fiber bundles (B) | [%] | 70 | 70 | 70 | 40 | 40 | 40 |
| X: average value of Mn/Ln | [mg/mm] | 0.028 | 0.028 | 0.028 | 0.022 | 0.022 | 0.022 |
| Resin | | E3500 | E3500 | E3500 | E3500 | E3500 | E3500 |
| Vf | [%] | 20 | 25 | 30 | 20 | 25 | 30 |
| Flowability | [%] | 370 | 345 | 300 | 300 | 280 | 260 |
| Flexural strength JIS-K7171 | [MPa] | 330 | 375 | 440 | 360 | 405 | 475 |
| CV value | [%] | ○ | ○ | ○ | ○ | ○ | ○ |
| η₀ | [Pa·s] | 3.0 x 10³ | 3.0 x 10³ | 3.0 x 10³ | 3.0 x 10³ | 3.0 x 10³ | 3.0 x 10³ |
| η | [Pa·s] | 1.1 x 10⁴ | 1.5 x 10⁴ | 2.1 x 10⁴ | 1.1 x 10⁴ | 1.5 x 10⁴ | 2.1 x 10⁴ |
| x: average of number of bundle-forming fibers | [number of fiber] | 400 | 400 | 400 | 318 | 318 | 318 |
| σ: standard variation | [number of fibers] | 315 | 315 | 315 | 200 | 200 | 200 |

**[Table 3]**

| Comparative Examples | | Comparative Example 1 | Comparative Example 2 |
|---|---|---|---|
| Carbon fiber | | Carbon fiber (1) | Carbon fiber (1) |
| Single fiber flexural stiffness | [Pa·m⁴] | 2.71 x 10⁻¹¹ | 2.71 x 10⁻¹¹ |
| D: fiber diameter | [µm] | 7 | 7 |
| L: fiber length | [mm] | 15 | 15 |
| Z: ratio of carbon fiber bundles (A) | [%] | 1 | 95 |
| Y: ratio of carbon fiber bundles (B) | [%] | 99 | 5 |
| X: average value of Mn/Ln | [mg/mm] | 0.55 | 0.550.01 |
| Resin | | CM1001 | CM1001 |
| Vf | [%] | 20 | 20 |
| Flowability | [%] | 320 | 120 |
| Flexural strength JIS-K7171 | [MPa] | 200 | 365 |
| CV value | [%] | X | ○ |
| η₀ | [Pa·s] | 1.5 x 10⁴ | 1.5 x 10⁴ |
| η | [Pa·s] | 1.6 x 10⁴ | 8.5 x 10⁵ |
| x: average of number of bundle-forming fibers | [number of fibers] | 7944 | 140 |
| σ: standard variation | [number of fibers] | 955 | 40 |

### Industrial Applications of the Invention

The stampable sheet according to the present invention can be applied for manufacturing any carbon fiber reinforced molded article required with combination of high flowability and mechanical properties and few variations in mechanical properties, that have not been achieved by the conventional technologies.

### Explanation of symbols

1: carding machine
2: cylinder roll
3: take-in roll
4: doffer roll
5: worker roll
6: stripper roll
7: feed roll
8: belt conveyer
9: discontinuous carbon fibers
10: sheet-like web
20: air laid machine
21: drum
22: pin cylinder
23: wire
24: suction box

## Claims

1. A stampable sheet comprising discontinuous carbon fibers and a thermoplastic resin as a matrix resin, **characterized in that** a viscosity η of said stampable sheet in a state where said matrix resin in said stampable sheet is molten is in a range of η₀ ≤ η < η₀exp(0.20Vf) (Pa·s), and a proportion Z of refined carbon fiber bundles (A), in which Mn/(Ln × D) is less than 8.5 × 10⁻¹ (mg/mm²), to the total weight of carbon fibers in said stampable sheet is in a range of 10 ≤ Z < 90 (wt%).
Where, η: apparent viscosity of said stampable sheet at a time when said matrix resin is molten (a viscosity at a temperature of a solidification start temperature of said matrix resin + 50°C), Vf: carbon fiber content (%) per unit volume of said stampable sheet, η₀: hypothetical resin viscosity of said matrix resin obtained by extending a characteristic line up to a position of Vf = 0% in a characteristic chart which is obtained by changing said Vf and represents a relationship between said Vf and the viscosity of said stampable sheet, Mn: weight of carbon fiber bundles, Ln: fiber length of carbon fibers, D: fiber diameter of carbon fibers.

2. The stampable sheet according to claim 1, wherein said proportion Z of said carbon fiber bundles (A) to the total weight of carbon fibers in said stampable sheet is in a range of 10 ≤ Z < 70 (wt%), a proportion Y of carbon fiber bundles (B), in which Mn/(Ln × D) is 8.5×10⁻¹ (mg/mm²) or more, to the total weight of carbon fibers is in a range of 30 ≤ Y < 90 (wt%), an average value X of Mn/Ln of said carbon fiber bundles (B) is in a range of 1.1 × 10⁻² ≤ X ≤ 8.1 × 10⁻² (mg/mm), and said Y satisfies Y ≥ 100X + 30.

3. The stampable sheet according to claim 1 or 2, wherein a standard deviation σ of a number of carbon fibers Xn forming a bundle of said carbon fiber bundles (B) in said stampable sheet satisfies 50 ≤ σ ≤ 400.

4. The stampable sheet according to any one of claims 1 to 3, wherein said fiber length Ln of carbon fibers in said stampable sheet is in a range of 5-25 mm.

5. The stampable sheet according to any one of claims 1 to 4, wherein said matrix resin comprises any one of polyamide, polypropylene and polyphenylene sulfide.

6. The stampable sheet according to any one of claims 1 to 5, wherein a single fiber flexural stiffness of carbon fibers forming said carbon fiber bundles (A) is in a range of 1.0×10⁻¹¹ to 2.8×10⁻¹¹ (Pa·m⁴).

7. The stampable sheet according to any one of claims 1 to 6, wherein said η₀ satisfies 2.0×10² ≤ η₀ ≤ 5.0×10⁴ (Pa·s).

8. The stampable sheet according to any one of claims 1 to 7, wherein said viscosity η of said stampable sheet is in a range of η₀exp(0.07Vf) ≤ η < η₀exp(0.20Vf) (Pa·s), and said Vf is in a range of 5 ≤ Vf ≤ 70 (%).

9. The stampable sheet according to any one of claims 1 to 8, wherein a carbon fiber aggregate in said stampable sheet comprises a carbon fiber nonwoven fabric made by a carding method.

10. The stampable sheet according to any one of claims 1 to 7, wherein said viscosity η of said stampable sheet is in a range of η₀ ≤ η < η₀exp(0.07Vf) (Pa·s), and said Vf is in a range of 5 ≤ Vf ≤ 70 (%).

11. The stampable sheet according to any one of claims 1 to 7 and 10, wherein a carbon fiber aggregate in said stampable sheet comprises a carbon fiber nonwoven fabric made by an air laid method.
